# EUROPEAN PATENT SPECIFICATION

(11) **EP 3 392 569 B1**
(45) Date of publication and mention of the grant of the patent: **17.03.2021**
(21) Application number: 17193079.5
(22) Date of filing: 26.09.2017
(51) Int. Cl.: F23R 3/10, F23R 3/26, F23R 3/54, F23D 14/48, F23R 3/28

(54) **FUEL NOZZLE ASSEMBLY WITH A FLOW GUIDE ASSEMBLY AND A GAS TURBINE**
BRENNSTOFFDÜSENANORDNUNG MIT STRÖMUNGFÜHRER UND GASTURBINE
BUSE DE COMBUSTIBLE COMPRENANT UN DISPOSITIF DE GUIDAGE D'AIR ET TURBINE À GAZ

(30) Priority: 18.04.2017 KR 20170049624
(43) Date of publication of application: 24.10.2018
(73) Proprietor: Doosan Heavy Industries & Construction Co., Ltd., Gyeongsangnam-do, 51711 (KR)
(72) Inventor: SHIM, Youngsam, 46017 Busan (KR); ROH, Ujin, 51515 Gyeongsangnam-do (KR); HAN, Dongsik, 51468 Gyeongsangnam-do (KR); SEO, Jae Won, 14462 Gyeonggi-do (KR)
(74) Representative: Ter Meer Steinmeister & Partner

(56) References cited:
- EP-A2- 2 568 221
- WO-A1-2016/209101
- CN-A- 104 566 459
- JP-A- 2012 145 312
- US-A- 5 540 406
- US-A1- 2009 173 074
- US-A1- 2009 183 511
- US-A1- 2011 094 232
- US-A1- 2012 024 985
- US-A1- 2015 113 993

## Description

### CROSS REFERENCE TO RELATED APPLICATION

The present application claims priority to Korean Patent Application No. 10-2017-0049624, filed April 18, 2017.

### BACKGROUND

The present invention relates to a fuel nozzle assembly and a gas turbine having the same and, more particularly, to a fuel nozzle assembly that is disposed in a compressed air channel formed between the body of a combustor and a housing in a gas turbine, and a gas turbine having the fuel nozzle assembly.

In general, a gas turbine 1 includes a compressor 11, a combustor 12, and a turbine 13. Air flowing inside through an air inlet 20 is compressed into high-temperature and high-pressure compressed air by the compressor 11. High-temperature and high-pressure combustion gas (working fluid) is produced by combusting the compressed air by supplying fuel to the compressed air in the combustor 12. The turbine 13 is operated by the combustion gas, and a power generator connected to the gas turbine 1 is operated.

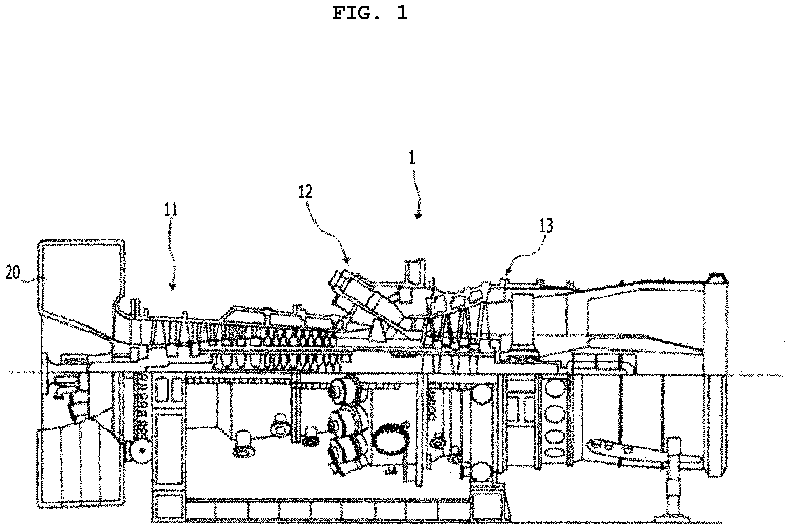

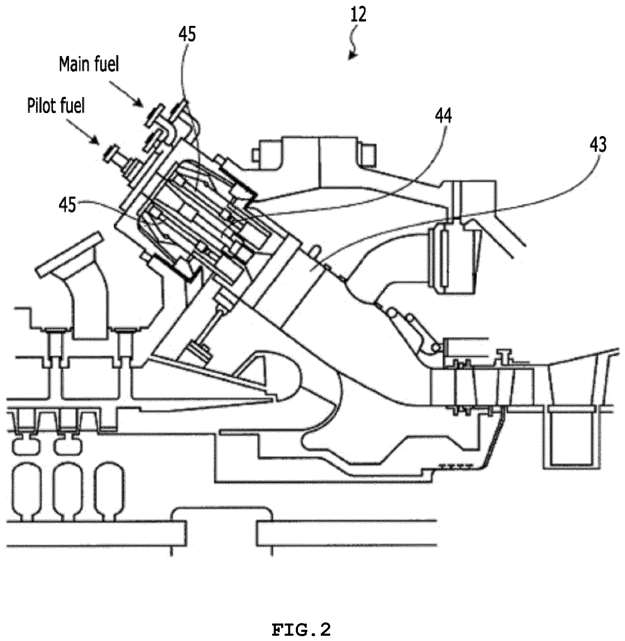

As shown in FIGS. 1 and 2, a combustor 12 of a gas turbine 1, includes a plurality of main burners 45 disposed around a pilot burner 44, a pilot nozzle disposed in the pilot burner 44, and a main nozzle disposed in the main burners 45. Further, the pilot burner 44 and the main burners 45 are arranged in the combustor 12 to face a combustion chamber 43 of the gas turbine.

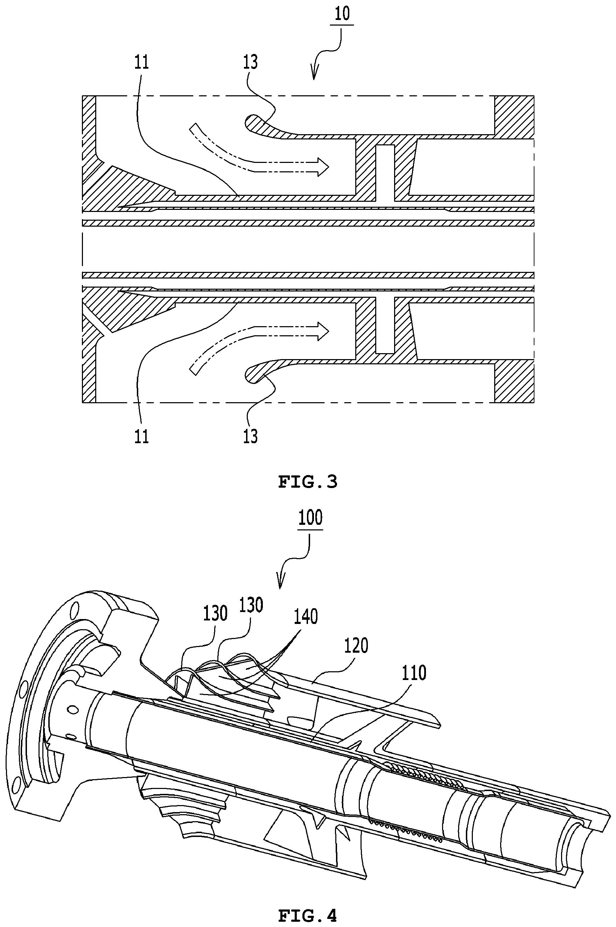

FIG. 3 is a partial cross-sectional view showing a combustor nozzle assembly 10. Referring to FIG. 3, the fuel nozzle assembly 10 guides suctioned compressed air using a shroud 13 mounted on the outer side of a nozzle body 11.

However, fluid separation may be generated on the shroud 13 fuel-air mixture may stagnate due to a vortex area around a nozzle vane or swirler (not shown). Accordingly, flame may be generated around the nozzle vane.

Further, in the shroud 13, a loss of pressure is generated by flow separation, which causes deterioration of the entire performance of the combustor. Therefore, there is a need to develop a fuel nozzle assembly that can solve the problems in the related art.

US 2009/173074 A1 discloses a fuel nozzle for a gas turbine including a center body defining one or more fuel passages and an inlet flow conditioner. The inlet flow conditioner includes a substantially tubular hub, a substantially tubular outer land, and a plurality of spars extending radially outwardly from the hub to the outer land. The plurality of spars together with the hub and outer land define a plurality of fluid flow passages capable of removing circumferential and radial variation from fluid flow entering the fuel nozzle. The inlet flow conditioner is formed as a single unitary component.

### SUMMARY

CN 104 566 459 A discloses a fuel nozzle for a gas turbine including a center body defining a plurality of fuel passages and an inlet flow conditioner which comprises flow guides with flow distribution holes used to ensure the axial velocity of the air flow.

An object of the present invention is to provide a fuel nozzle assembly that can solve flame holding due to flow separation at an end of the shroud of existing fuel nozzles, can improve performance of a combustor, and can solve a loss of pressure in the entire combustor by preventing a loss of pressure due to flow separation by preventing the flow separation, and provide a gas turbine having the fuel nozzle assembly.

The object is solved by the features of the independent claims. Preferred embodiments are given in the dependent claims.

A fuel nozzle guide according to an aspect is disposed in a compressed air channel formed between a body and a housing of a gas turbine and includes a nozzle body disposed in the housing, a shroud mounted on an outer side of the nozzle body, and two or more flow guides arranged at predetermined distances from each other between the shroud and the outer surface of the nozzle body, and formed to correspond to the shape of an end of the shroud and the shape of the outer surface of the nozzle body.

The flow guides have a curved portion formed to correspond to the shape of an end of the shroud and a straight portion extending from the curved portion at a predetermined portion in a longitudinal direction of the nozzle body in parallel with the outer surface of the nozzle body.

A first projection extending in the longitudinal direction of the nozzle body may be formed on an inner surface of the curved portion to guide the flow flowing on the curved portion.

The first projection may be inclined at a predetermined angle.

A second projection extending in the longitudinal direction of the nozzle body may be formed on an inner surface of the straight portion to guide the flow flowing on the straight portion.

The first projection and the second projection may integrally extend.

Two or more sub-channels spaced at a predetermined angle from each other may be formed through a joint between the curved portion and the straight portion of the flow guide.

An imaginary line connecting all of ends of the flow guides may be inclined at an acute angle toward a center of the nozzle body.

The angle between the imaginary line and a center line of the nozzle body may be 35 to 55 degrees.

The fuel nozzle assembly may further include two or more spacers arranged at predetermined angles on the outer surface of the nozzle body and connecting the flow guides and the nozzle body to each other.

The spacers may extend a predetermined distance in the longitudinal direction of the nozzle body and may have an airfoil shape in a side cross-section.

The spacers may extend at a predetermined angle from the center line of the nozzle body.

A gas turbine according to another aspect has a fuel nozzle guide that is disposed in a compressed air channel formed between a body and a housing of a gas turbine, and the fuel nozzle assembly includes a nozzle body disposed in the housing, a shroud mounted on an outer side of the nozzle body, and two or more flow guides arranged at predetermined distances from each other between the shroud and the outer surface of the nozzle body and formed to correspond to the shape of an end of the shroud and the shape of the outer surface of the nozzle body.

An imaginary line connecting all of ends of the flow guides may be inclined at an acute angle toward a center of the nozzle body.

The fuel nozzle assembly may further include two or more spacers arranged at predetermined angles on the outer surface of the nozzle body and connecting the flow guides and the nozzle body to each other.

As described above, according to the fuel nozzle assembly of the present disclosure, it is possible to provide a fuel nozzle assembly that can solve a loss of pressure due to flow separation by preventing flow separation and solve a loss of pressure of the entire combustor, and a gas turbine having the fuel nozzle assembly.

Further, according to the fuel nozzle assembly of the present disclosure, since flow separation is prevented by the flow guides having a specific structure, it is possible to solve flame holding due to flow separation at an end of a shroud of existing fuel nozzles and improve the performance of a combustor.

Further, according to the fuel nozzle assembly of the present disclosure, since the flow guides have a curved portion and a straight portion, it is possible to more stably guide fluid flowing along the flow guides, so it is possible to effectively prevent flow separation.

Further, according to the fuel nozzle assembly of the present disclosure, since the first projections and the second projections are formed at specific positions, it is possible to more stably guide fluid flowing along the flow guides, so it is possible to effectively prevent flow separation.

Further, according to the fuel nozzle assembly of the present disclosure, since sub-channels having a specific structure are formed at the joints between the curved portions and the straight portions, it is possible to prevent flow separation that may be generated at the joints between the curved portions and the straight portions and it is possible to more stably guide the fluid flowing along the flow guides. Accordingly, it is possible to more effectively prevent flow separation.

Therefore, according to the fuel nozzle assembly of the present disclosure, since there arc provided spacers having a specific structure, it is possible to more stably guide fluid flowing along the flow guides, so it is possible to effectively prevent flow separation.

### BRIEF DESCRIPTION OF THE DRAWINGS

The above and other objects, features and other advantages of the present disclosure will be more clearly understood from the following detailed description when taken in conjunction with the accompanying drawings, in which:
FIG. 1 is a front view showing a gas turbine;
FIG. 2 is a partial cross-sectional view showing the combustor shown in FIG. 1;
FIG. 3 is a partial cross-sectional view showing a fuel nozzle assembly;
FIG. 4 is a partial cross-sectional perspective view showing a fuel nozzle assembly according to an exemplary embodiment;
FIG. 5 is a partial cross-sectional view showing the fuel nozzle assembly according to an exemplary embodiment;
FIG. 6 is a perspective view showing the fuel nozzle assembly according to an exemplary embodiment;
FIG. 7 is a partial cross-sectional view showing in detail the structure of a flow guide of the fuel nozzle assembly shown in FIG. 5;
FIG. 8 is a cross-sectional perspective view showing the flow guides of the fuel nozzle assembly according to an exemplary embodiment;
FIG. 9 is a partial cross-sectional view showing a fuel nozzle assembly according to another exemplary embodiment; and
FIGS. 10A and 10B are perspective views showing a spacer of the fuel nozzle assembly according to another exemplary embodiment.

### DETAILED DESCRIPTION

Hereinafter, the exemplary embodiments are described in detail with reference to the drawings. The terms and words used in the present specification and claims should not be interpreted as being limited to typical meanings or dictionary definitions, but should be interpreted as having meanings and concepts relevant to the technical scope of the present invention.

It should be understood that when an element is referred to as being "on" another element, the elements may be in contact with each other or there may be an intervening element present. Through the present specification, unless explicitly described otherwise, "comprising" any components will be understood to imply the inclusion of other components rather than the exclusion of any other components.

FIG. 4 is a partial cross-sectional perspective view showing a fuel nozzle assembly according to an exemplary embodiment. Referring to FIG. 4, a fuel nozzle assembly 100 according to the exemplary embodiment, which is disposed in a compressed air channel formed between the body of a combustor and a housing of a gas turbine, includes flow guides 130 having a specific structure. The fuel nozzle assembly 100 according to the exemplary embodiment includes flow guides 130 having a specific structure to provide a fuel nozzle assembly 100 that can solve a loss of pressure in the entire combustor by preventing a loss of pressure due to flow separation by preventing a flow separation, and provide a gas turbine having the fuel nozzle assembly.

The components of the fuel nozzle assembly 100 according to the exemplary embodiment are described hereafter in detail with reference to the drawings.

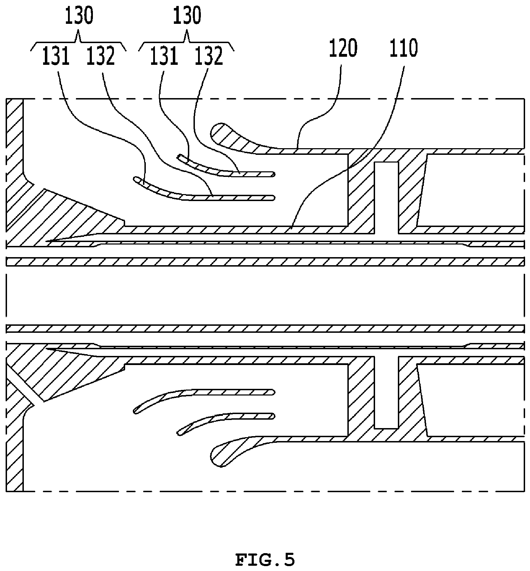

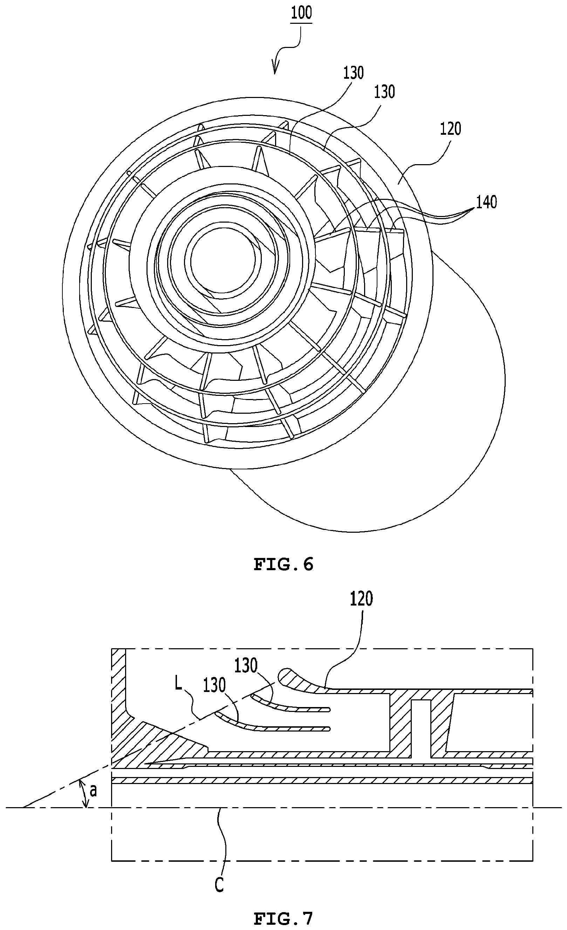

FIG. 5 is a partial cross-sectional view showing the fuel nozzle assembly according to an exemplary embodiment. FIG. 6 is a perspective view showing the fuel nozzle assembly according to an exemplary embodiment. FIG. 7 is a partial cross-sectional view showing in detail the structure of a flow guide of the fuel nozzle assembly shown in FIG. 5.

Referring to the figures, the fuel nozzle assembly 100 according to the exemplary embodiment includes a nozzle body 110, a shroud 120, and flow guides 130.

The nozzle body 110 has a fuel supply channel for supplying fuel and is disposed in the housing. The shroud 120 is mounted on the outer side of the nozzle body 110.

Two or more flow guides 130 according to the exemplary embodiment are arranged at regular intervals between the shroud 120 and the outer surface of the nozzle body 110. The flow guides 130 are curved to correspond to the shape of an end portion of the shroud 120 and then formed straight to correspond the shape of the outer surface of the nozzle body 110, which is advantageous in terms of flow. The surfaces of the flow guides 130 may be composed of a curved surface and a straight surface that are smoothly connected.

As shown in FIG. 5, the flow guides 130 each may have a curved portion 131 and a straight portion 132 that have specific structures. The curved portion 131, as shown in FIGS. 4 and 5, is formed to correspond to the shape of an end portion of the shroud 120. The straight portion 132 extends from the curved portion 131 at a predetermined length in parallel with the nozzle body 110 and may be in parallel with the outer surface of the nozzle body 110. Two or more flow guides 130 according to the exemplary embodiment may be formed around the outer surface of the nozzle body 110.

As shown in FIG. 7, an imaginary line L connecting ends of the flow guides 130 may be inclined at an acute angle toward the center of the nozzle body 110. The angle 'a' between the imaginary line L and the center line C of the nozzle body 110 may be 35 to 55 degrees but may be a different angle as long as compressed air can be smoothly suctioned.

As the angle between the imaginary line connecting all the ends of the flow guides 130 and the center line of the nozzle body 110 is an acute angle, the curved portions 131 of the flow guides 130 closer to the nozzle body 110 further protrude with respect to the flow of compressed air. As can be seen from FIG. 7, in order to smoothly change the direction of the flow of compressed air that is turned almost 180°, the compressed air far from the nozzle body 110 should be guided to the inner flow guides 130 through the shroud 120. For more effective flow of comprcsscd air, the flow guides 130 closer to the nozzle body 110 should guide the outside flow, so it is advantageous that the curved portions 131 of the inner flow guide 130 further protrude to the flow of the compressed air.

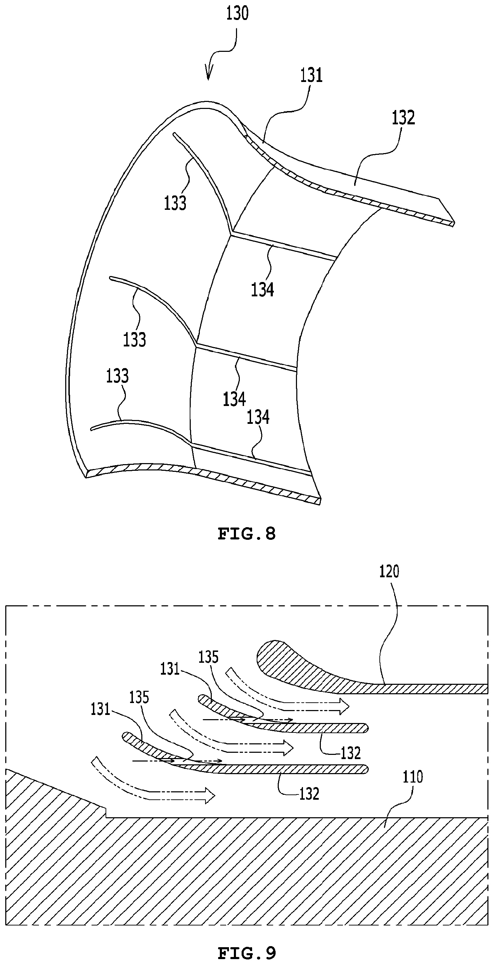

FIG. 8 is a cross-sectional perspective view showing the flow guides of the fuel nozzle assembly according to an exemplary embodiment. Referring to FIG. 8, a first projection 133 extending in the longitudinal direction of the nozzle body 110 is formed on a surface of the curved portions 131 of the flow guides 130 according to the exemplary embodiment. The first projection 133 can stably guide the flow flowing on the curved portion 131, so it can effectively prevent flow separation.

If necessary, the first protrusion 133, as shown in FIG. 8, may be inclined at a predetermined angle from the center line of the nozzle body 110. Accordingly, it is possible to stably guide fluid into a desired direction.

Further, as shown in FIG. 8, a second projection 134 extending in the longitudinal direction of the nozzle body 110 is formed on a surface of the straight portions 132, so it can more stably guide fluid. In this case, the first projection 133 and the second projection 134 may integrally extend. If the first projection 133 and the second projection 134 are separately formed, flow separation of fluid may be generated at the spaced ends, so it is not advantageous.

FIG. 9 is a partial cross-sectional view showing a fuel nozzle assembly according to another exemplary embodiment. Referring to FIG. 9, two or more sub-channels 135 are formed through the joints of the curved portions 131 and the straight portions 132 of the flow guides 130 according to the exemplary embodiment. The sub-channels 135 may be formed in parallel with the straight portions 132.

Since the sub-channels 135 having a specific structure are formed at the joints between the curved portions 131 and the straight portions 132, it is possible to prevent flow separation that may be generated at the joints between the curved portions 131 and the straight portions 132 and it is possible to more stably guide the fluid flowing along the flow guides. Accordingly, it is possible to more effectively prevent flow separation.

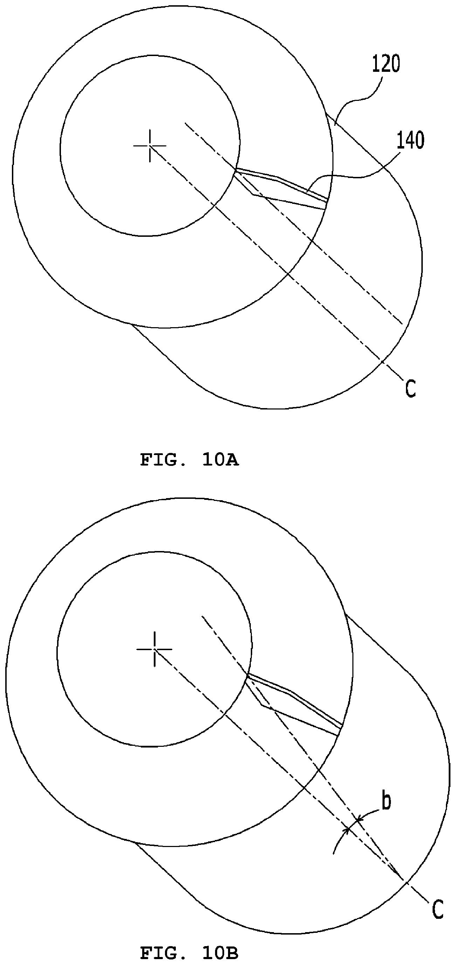

FIGS. 10A and 10B are perspective views showing a spacer of the fuel nozzle assembly according to another exemplary embodiment. Referring to FIGS. 10A and 10B with FIG. 6, the fuel nozzle assembly according to the exemplary embodiment may further include spacers 140 connecting the flow guides 130 and the nozzle body 110.

Two or more spacers 140 according to the exemplary embodiment may be formed around the outer surface of the nozzle body 110 at predetermined angles. The spacers 140 extend a predetermined length in the longitudinal direction of the nozzle body 110 and may have an airfoil shape in a side cross-section.

As shown in FIG. 10A, the spacers 140 according to the exemplary embodiment may extend in parallel with the center line C of the nozzle body 110. In order to guide flow in a specific direction, the spacers 140 may be mounted at a predetermined angle 'b' from the center line C of the nozzle body 110 as shown in FIG. 10B.

Therefore, according to the exemplary embodiment, the spacers 140 having a specific structure more stably guide fluid flowing along the flow guides 130, so it is possible to effectively prevent flow separation.

Further, the exemplary embodiments can provide a gas turbine having the fuel nozzle assembly 100 according to the present disclosure, so it is possible to provide a gas turbine of which the performance of the combustor can be remarkably improved and the efficiency is improved.

## Claims

1. A fuel nozzle assembly (100) for a gas turbine (1), comprising:
a nozzle body (110) configured to be disposed in a compressed air channel formed between a body and a housing of the gas turbine;
a shroud (120) mounted on an outer surface of the nozzle body (110); and
two or more flow guides (130) arranged at predetermined distances from each other between the shroud (120) and the outer surface of the nozzle body (110) and having a shape that corresponds to the shape of an end portion of the shroud (120) and the outer surface of the nozzle body (110),
wherein the end portion of the shroud (120) has an increasing diameter in upstream direction, and
wherein the flow guides (130) include a curved portion (131) formed to correspond to the shape of the end portion of the shroud (120), and a straight portion (132) extending from the curved portion (131) at a predetermined distance in a longitudinal direction parallel with the outer surface of the nozzle body (110);
**characterized in that**
a sub-channel (135) is formed through a joint between the curved portion (131) and the straight portion (132) of the flow guide (130), and wherein the sub-channel (135) is parallel with the straight portion (132).

2. The fuel nozzle assembly (100) of claim 1, wherein a first projection (133) extending in the longitudinal direction of the nozzle body (110) is formed on an inner surface of the curved portion (131) to guide the flow flowing on the curved portion (131).

3. The fuel nozzle assembly (100) of claim 2, wherein the first projection (133) is inclined at a predetermined angle from the centerline of the nozzle body (110).

4. The fuel nozzle assembly (100) of claim2 or 3, wherein a second projection (134) extending in the longitudinal direction of the nozzle body (110) is formed on an inner surface of the straight portion (132) to guide the flow flowing on the straight portion (132).

5. The fuel nozzle assembly (100) of claim 4, wherein the first projection (133) and the second projection (134) integrally extend.

6. The fuel nozzle assembly (100) of any one of the preceding claims, wherein the flow guides (130) are arranged such that ends of the flow guides (130) form an imaginary line (L) that is inclined at an acute angle (a) from a center of the nozzle body (110).

7. The fuel nozzle assembly (100) of claim 6, wherein the angle (a) formed between the imaginary line (L) and the center of the nozzle body (110) is between about 35 to 55 degrees.

8. The fuel nozzle assembly (100) of any one of the preceding claims, further comprising two or more spacers (140) arranged at predetermined angles on the outer surface of the nozzle body (110) and connecting the flow guides (130) and the nozzle body (110) to each other.

9. The fuel nozzle assembly (100) of claim 8, wherein the spacers (140) extend a predetermined distance in the longitudinal direction of the nozzle body (110) and have an airfoil shape in a side cross-section.

10. The fuel nozzle assembly (100) of claim 8 or 9, wherein the spacers (140) extend at a predetermined angle (b) from the center of the nozzle body (110).

11. A gas turbine (1), comprising:
a compressed air channel formed between a body and a housing of a combustor (12); and
a fuel nozzle assembly (100) as claimed in any one of the preceding claims and being disposed in the compressed air channel.

12. The gas turbine (1) of claim 11, wherein the flow guides (130) are arranged such that ends of the flow guides (130) form an imaginary line (L) that is inclined at an acute angle (a) from a center of the nozzle body (110).

## Patentansprüche

1. Brennstoffdüsenanordnung (100) für eine Gasturbine (1), die Folgendes umfasst:
einen Düsenkörper (110), der konfiguriert ist, in einem Druckluftkanal angeordnet zu werden, der zwischen einem Körper und einem Gehäuse der Gasturbine gebildet ist;
eine Ummantelung (120), die an einer Außenfläche des Düsenkörpers (110) montiert ist; und
zwei oder mehr Strömungsführungen (130), die mit vorgegebenen Abständen voneinander zwischen der Ummantelung (120) und der Außenfläche des Düsenkörpers (110) angeordnet sind, und eine Form aufweisen, die der Form eines Endabschnitts der Ummantelung (120) und der Außenfläche des Düsenkörpers (110) entspricht,
wobei der Endabschnitt der Ummantelung (120) in einer stromaufwärtigen Richtung einen zunehmenden Durchmesser aufweist, und
wobei die Strömungsführungen (130) einen gekrümmten Abschnitt (131), der gebildet ist, um der Form des Endabschnitts der Ummantelung (120) zu entsprechen, und einen geraden Abschnitt (132), der sich von dem gekrümmten Abschnitt (131) in einem vorgegebenen Abstand in einer Längsrichtung parallel zu der Außenfläche des Düsenkörpers (110) erstreckt, enthalten;
**dadurch gekennzeichnet, dass**
ein Unterkanal (135) durch eine Verbindung zwischen dem gekrümmten Abschnitt (131) und dem geraden Abschnitt (132) der Strömungsführung (130) gebildet ist, und wobei der Unterkanal (135) zu dem geraden Abschnitt (132) parallel ist.

2. Brennstoffdüsenanordnung (100) nach Anspruch 1, wobei ein erster Vorsprung (133), der sich in Längsrichtung des Düsenkörpers (110) erstreckt, auf einer Innenfläche des gekrümmten Abschnitts (131) gebildet ist, um die Strömung, die in dem gekrümmten Abschnitt (131) strömt, zu führen.

3. Brennstoffdüsenanordnung (100) nach Anspruch 2, wobei der erste Vorsprung (133) unter einem vorgegebenen Winkel von der Mittellinie des Düsenkörpers (110) geneigt ist.

4. Brennstoffdüsenanordnung (100) nach Anspruch 2 oder 3, wobei ein zweiter Vorsprung (134), der sich in Längsrichtung des Düsenkörpers (110) erstreckt, auf einer Innenfläche des geraden Abschnitts (132) gebildet ist, um die Strömung, die in dem geraden Abschnitt (132) strömt, zu führen.

5. Brennstoffdüsenanordnung (100) nach Anspruch 4, wobei sich der erste Vorsprung (133) und der zweite Vorsprung (134) einteilig erstrecken.

6. Brennstoffdüsenanordnung (100) nach einem der vorhergehenden Ansprüche, wobei die Strömungsführungen (130) derart angeordnet sind, dass die Enden der Strömungsführungen (130) eine imaginäre Linie (L) bilden, die unter einem spitzen Winkel (a) von einem Mittelpunkt des Düsenkörpers (110) geneigt ist.

7. Brennstoffdüsenanordnung (100) nach Anspruch 6, wobei der Winkel (a), der zwischen der imaginären Linie (L) und dem Mittelpunkt des Düsenkörpers (110) gebildet ist, etwa zwischen 35 und 55 Grad liegt.

8. Brennstoffdüsenanordnung (100) nach einem der vorhergehenden Ansprüche, die ferner zwei oder mehr Abstandshalter (140) umfasst, die unter vorgegebenen Winkeln auf der Außenfläche des Düsenkörpers (110) angeordnet sind, und die Strömungsführungen (130) und den Düsenkörper (110) miteinander verbinden.

9. Brennstoffdüsenanordnung (100) nach Anspruch 8, wobei sich die Abstandshalter (140) um einen vorgegebenen Abstand in die Längsrichtung des Düsenkörpers (110) erstrecken und in einem Seitenquerschnitt eine Tragflügelform aufweisen.

10. Brennstoffdüsenanordnung (100) nach Anspruch 8 oder 9, wobei sich die Abstandshalter (140) unter einem vorgegebenen Winkel (b) von dem Mittelpunkt des Düsenkörpers (110) erstrecken.

11. Gasturbine (1), die Folgendes umfasst:
einen Druckluftkanal, der zwischen einem Körper und einem Gehäuse einer Brennkammer (12) angeordnet sind; und
eine Brennstoffdüsenanordnung (100) nach einem der vorhergehenden Ansprüche, die in dem Druckluftkanal angeordnet ist.

12. Gasturbine (1) nach Anspruch 11, wobei die Strömungsführungen (130) derart ausgelegt sind, dass die Enden der Strömungsführungen (130) eine imaginäre Linie (L) bilden, die unter einem spitzen Winkel (a) von einem Mittelpunkt des Düsenkörpers (110) geneigt ist.

## Revendications

1. Ensemble d'injecteurs de combustible (100) pour une turbine à gaz (1), comportant :
un corps d'injecteur (110) configuré pour être disposé dans un canal d'air comprimé formé entre un corps et un carter de la turbine à gaz ;
une chemise (120) montée sur une surface extérieure du corps d'injecteur (110) ; et
deux guides d'écoulement (130) ou plus agencés à des distances prédéterminées l'un de l'autre entre la chemise (120) et la surface extérieure du corps d'injecteur (110) et ayant une forme qui correspond à la forme d'une partie d'extrémité de la chemise (120) et de la surface extérieure du corps d'injecteur (110),
dans lequel la partie d'extrémité de la chemise (120) a un diamètre croissant dans une direction amont, et
dans lequel les guides d'écoulement (130) incluent une partie courbe (131) formée pour correspondre à la forme de la partie d'extrémité de la chemise (120), et une partie droite (132) s'étendant à partir de la partie courbe (131) à une distance prédéterminée dans une direction longitudinale parallèle à la surface extérieure du corps d'injecteur (110) ;
**caractérisé en ce que**
un canal secondaire (135) est formé par une jonction entre la partie courbe (131) et la partie droite (132) du guide d'écoulement (130), et dans lequel le canal secondaire (135) est parallèle à la partie droite (132).

2. Ensemble d'injecteurs de combustible (100) selon la revendication 1, dans lequel une première saillie (133) s'étendant dans la direction longitudinale du corps d'injecteur (110) est formée sur une surface intérieure de la partie courbe (131) pour guider l'écoulement s'écoulant sur la partie courbe (131).

3. Ensemble d'injecteurs de combustible (100) selon la revendication 2, dans lequel la première saillie (133) est inclinée à un angle prédéterminé par rapport à la ligne médiane du corps d'injecteur (110).

4. Ensemble d'injecteurs de combustible (100) selon la revendication 2 ou 3, dans lequel une seconde saillie (134) s'étendant dans la direction longitudinale du corps d'injecteur (110) est formée sur une surface intérieure de la partie courbe (132) pour guider l'écoulement s'écoulant sur la partie droite (132).

5. Ensemble d'injecteurs de combustible (100) selon la revendication 4, dans lequel la première saillie (133) et la seconde saillie (134) s'étendent d'un seul tenant.

6. Ensemble d'injecteurs de combustible (100) selon l'une quelconque des revendications précédentes, dans lequel les guides d'écoulement (130) sont agencés de telle sorte que des extrémités des guides d'écoulement (130) forment une ligne fictive (L) qui est inclinée à un angle aigu (a) par rapport à un centre du corps d'injecteur (110).

7. Ensemble d'injecteurs de combustible (100) selon la revendication 6, dans lequel l'angle (a) formé entre la ligne fictive (L) et le centre du corps d'injecteur (110) est compris entre environ 35 et 55 degrés.

8. Ensemble d'injecteurs de combustible (100) selon l'une quelconque des revendications précédentes, comportant en outre deux entretoises (140) ou plus agencées à des angles prédéterminés sur la surface extérieure du corps d'injecteur (110) et reliant les guides d'écoulement (130) et le corps d'injecteur (110) les uns aux autres.

9. Ensemble d'injecteurs de combustible (100) selon la revendication 8, dans lequel les entretoises (140) s'étendent à une distance prédéterminée dans la direction longitudinale du corps d'injecteur (110) et ont une forme aérodynamique dans une section transversale latérale.

10. Ensemble d'injecteurs de combustible (100) selon la revendication 8 ou 9, dans lequel les entretoises (140) s'étendent à un angle prédéterminé (b) par rapport au centre du corps d'injecteur (110).

11. Turbine à gaz (1) comportant :
un canal d'air comprimé formé entre un corps et un carter d'une chambre de combustion (12) ; et
un ensemble d'injecteurs de combustible (100) selon l'une quelconque des revendications précédentes et étant disposé dans le canal d'air comprimé.

12. Turbine à gaz (1) selon la revendication 11, dans laquelle les guides d'écoulement (130) sont agencés de telle sorte que des extrémités des guides d'écoulement (130) forment une ligne fictive (L) qui est inclinée à un angle aigu (a) par rapport à un centre du corps d'injecteur (110).
